# EUROPEAN PATENT APPLICATION

(11) **EP 4 840 990 A1**
(43) Date of publication of application: **18.11.2026**
(21) Application number: 25176294.4
(22) Date of filing: 14.05.2025
(51) Int. Cl.: C25B 9/01, C25B 9/19, C25B 13/02

(54) **BIPOLAR PLATE AND ELECTROLYSIS STACK**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Widuch, Dennis, 60439 Frankfurt am Main (DE); Tadiello, Jean-Philippe, 60439 Frankfurt am Main (DE); Nesselberger, Markus, 60439 Frankfurt am Main (DE)
(74) Representative: Air Liquide

(57) **Abstract**

Bipolar plate (1, 1a, 1b) for forming an electrolysis stack in which a plurality of electrode cells (10, 10a, 10b) are stacked. The bipolar plate (1, 1a, 1b) comprises a plate cross-section having a wavy shape providing a plurality of dimples (5) and protrusions (6) in an alternating manner along a center line (4) of the plate cross-section, wherein the protrusions (6) and the dimples (5) extend longitudinally across the bipolar plate (1, 1a, 1b), forming parallel rows.

## Description

### TECHNICAL FIELD

The invention relates to a bipolar plate for forming an electrolysis stack in which a plurality of electrode cells are stacked, and in which the electrode cells each comprise two electrodes in the form of an anode and a cathode, and a membrane separating the anode and the cathode, wherein neighboring electrode cells are separated by bipolar plates that are in electrically conductive contact with the anode and cathode of the neighboring electrode cells. The invention further relates to an electrolysis stack.

### BACKGROUND OF THE INVENTION

Among the fields of hydrogen production technology, water electrolysis is a technology that electrolyzes water to produce high-purity hydrogen, including alkaline water electrolysis, polymer electrolyte membrane electrolysis, solid oxide electrolyser cell technology, etc. Among these, alkaline water electrolysis is a technology that generates hydrogen and oxygen by electrolyzing water in a basic environment using an aqueous alkaline solution such as KOH or NaOH as an electrolyte.

In water electrolysis technology, hydrogen gas is generated at the cathode and oxygen at the anode in each cell. To increase the amount of gas produced per electrolyzer many electrolysis cells may be combined into an electrolyzer stack, in which the electrolysis cells are stacked back-to-back with alternating electrical polarity. Each cell has an anode and a cathode, separated by an electrolyte membrane, also referred to as diaphragm. This membrane allows ions to pass through while keeping the hydrogen and oxygen gases separate. Electrically conductive and gas-tight bipolar plates ensure the electrical connection between the different cell sides of the consecutive cells. These bipolar plates transfer the electrical current from the anode of one cell to the cathode of the next, enabling the stack to work as a whole. This ensures that the electrolysis stack functions as a unified system. Often, bipolar plates include dimples, which are small, indented areas on the plate's surface to increase the contact surface with the anode on one side and the cathode on the other to enhance conductivity.

In modern electrolysis stacks, a key concept is the "Zero Gap" arrangement. In this arrangement the electrodes are pressed against the membrane to make sure that "no gap" is left resulting in the only distance between the electrodes being the thickness of the membrane, i.e., the electrodes and the membrane are placed as close as possible to each other. This gap reduction improves the efficiency of the electrolysis process by minimizing the resistance within the cell. By reducing the distance between the components, the stack requires less energy to perform the electrolysis, making it more efficient. The bipolar plates are critical in this context. They press the anode, cathode, and membrane together, maintaining the very small gap between these components.

However, even with modern manufacturing processes, deviations in the production process of the electrolysis stack components can occur, in particular outside the applied tolerances. Therefore, every cell needs to have one or more cell components that are able to attenuate or even compensate for those deviations. State of the art designs make use of a membrane which is compressible, e.g., a diaphragm made of Asbestos (3.3mm thickness) or PPS (Polyphenylene sulfide) felt that can act as compressible element. While compressing the stack, bipolar plates are pressing the electrodes against the membrane. In case of manufacturing deviations, e.g. in the bipolar plate, outside the applied tolerance range, the compression of the membrane is able to equalize these manufacturing deviations. However, compensating for manufacturing variations by compressing the membrane is not compatible with new membrane technologies, especially not with membranes that offer no or insufficient compressibility. New membrane materials made of zirconium oxide in a polysulfone matrix, for example distributed under the product name Zirfon by the company AGFA, do not exhibit adequate compressibility. While this membrane is significantly thin (0.22 mm) and can improve the efficiency of the electrolyzer by reducing the cell resistance, it is not able to equalize excess of tolerances by compressibility.

It is object of the invention to propose a solution that effectively compensates for deviations in manufacturing of electrolysis stack technology. The solution should be advantageous for zero-gap configurations.

### SUMMARY OF THE INVENTION

The object of the invention is solved with the features of the independent claims. Advantageous refinements are presented in the dependent claims. The features described in the claims and in the description can be combined with each other in any technologically reasonable manner.

In a first aspect of the invention a bipolar plate is presented, for forming an electrolysis stack in which a plurality of electrode cells are stacked, and the electrode cells each comprise two electrodes in the form of an anode and a cathode, and a membrane separating the anode and cathode, wherein neighboring electrode cells are separated by bipolar plates that are in electrically conductive contact with the anode and cathode of the neighboring electrode cells. The bipolar plate comprises a plate cross-section having a wavy shape providing a plurality of dimples and protrusions in an alternating manner along a center line of the plate cross-section, wherein the protrusions and the dimples extend longitudinally across the bipolar plate, forming parallel rows.

The wave shape of the bipolar plate cross-section is configured to cause deformation, i.e., bending, of the anode, cathode and the membrane between them, when the electrode cell is clamped between two of the bipolar plates, i.e., sandwiched between them. The wave shape of the bipolar plate allows for greater manufacturing tolerances. The bent components of the electrolytic cell are clamped between adjacent bipolar plates and rest against each other in the zero-gap arrangement, even if the relative distance between adjacent bipolar plates is varied in a range. Furthermore, the waveform may provide an elasticity of the bipolar plates, which may even more compensate for manufacturing deviations.

The bipolar plate cross-section is a cut through the bipolar plate from one plate surface to the other. The center line of the bipolar plate cross-section is a reference line that runs equidistant between the upper and lower boundaries of the bipolar plate's cross-sectional profile. In other words, in the plate's cross-section, the centerline represents the midplane along which alternating protrusions and dimples are, preferably symmetrically, distributed. The center line serves as a reference axis for alternating pattern of protrusions and dimples along the center line on both sides of the bipolar plate.

The term "dimples" as used herein refers to indentations of one plate surface; they may extend below to centerline or the midplane or end before reaching the centerline. The term "protrusions" refers to raised surface areas above the centerline or the midplane. Protrusions and dimples can be identified by the fact that a protrusion on one side of the plate provides the highest point of the plate surface, the dimple the lowest.

A dimple on one side of the bipolar plate may form a protrusion on the other side of the bipolar plate, and vice versa.

The protrusions may form elongated extending ribs, and the dimples may form elongated extending grooves on one side of the bipolar plate. Preferably the bipolar plate comprises a plurality of parallel rows of protrusions alternating with parallel rows of dimples formed on both sides. Preferably all rows of protrusions and dimples of the bipolar plate are aligned parallel.

Wave shape does not mean that the wave peaks/valleys must be round. They can also be flattened. The protrusions and dimples may also be stepped.

The bipolar plate may form an inlet, e.g., for electrolyte fluid, and an outlet, e.g., for gas arranged on opposite radially outward sections of the bipolar plate. Preferably, the bipolar plate is of circular shape. Preferably, the rows of protrusions and dimples are arranged in parallel with a line between the inlet and the outlet.

According to a further embodiment of the invention, one plate side of the bipolar plate is at least partly formed like the other plate side of the bipolar plate. That means, at least in regions of the bipolar plate the protrusions and dimples on the one and the other side are formed in a corresponding manner. Preferably, one plate side of the bipolar plate is at least partly formed like the other plate side of the bipolar plate, but forms its negative counterpart. In other words, protrusions on one side of the bipolar plate form dimples on the other side of the bipolar plate, and vice versa. At least in the regions of the bipolar plate comprising the protrusions and dimples, the one side of the bipolar plate forms the negative imprint of the other side, such that protrusions on one side correspond with the dimples on the other side. The structure of protrusions and dimples is formed in a complementary manner on both sides. The definition (dimple or protrusion) is only dependent on the surface under consideration. Correspondingly shaped bipolar plate surfaces are favorable in terms of production. Further, this structure also facilitates the assembly and fixation of the electrode cell between two bipolar plates that are correspondingly formed. Two correspondingly formed bipolar plates, aligned in the same direction, may accommodate an electrode cell between them such that protrusions of the one bipolar plate facing the electrode cell are at least partly received within the backside of protrusions of the other bipolar plate, thereby improving the bending and shaping of the electrode cell components.

The bipolar plate may be elastically deformable. That is, the bipolar plate may be configured to be elastically deformed when installed in an electrolysis stack as intended. The elasticity is further improved by the wavy shaped cross-section and further enhances the close contact of the electrode cell components.

According to a further embodiment of the invention, the protrusions each extend along a protrusion central axis, wherein the distance between adjacent protrusion central axes is in a range from 30 mm to 100 mm. It has been found that a repetition of protrusions in this distance range offers very good manufacturing deviation compensation paired with very close contact of the electrode cell components, and with the bipolar plates.

Preferably, the tips of the protrusions and/or the bottom of the dimples are flattened. Flat upper surfaces of the protrusions and flat bottom surfaces of dimples ensure large pressing surfaces that act on the components of the electrode cell such as to improve the close contact.

Preferably, the protrusions comprise tapered elevations and the dimples comprises inclined surfaces extending from the bottom surface.

Preferably, surfaces of the protrusions merge with surfaces of the dimples, preferably in a straight line, so that a flat surface is formed between an upper or distal end of a protrusion and the bottom surface of a dimple.

According to a further embodiment of the invention, ridges project from the bottom of the dimples and extend between the adjacent rows of protrusions, wherein the ridges are provided by corresponding depressions in the projections on the opposite side of the plate. The ridges, and the corresponding depressions in the projections on the opposite side of the bipolar plate, preferably extend perpendicularly to the longitudinally extending protrusions and dimples. In this way, the dimples and protrusions create flow paths for the electrolyte, allowing the fluid to be distributed across the parallel rows of dimples and protrusions. This enhances the distribution of electrode fluid across the bipolar plate surface and also improve gas collecting. Preferably, the maximum height of the height of the ridges is the centerline. More preferably, the ridges do not extend above the centerline.

According to a further embodiment of the invention, the protrusions in each of a first plate cross-sectional view and a second cross-sectional view perpendicular to the first plate cross-sectional view each form one or more trapezoidal shapes.

According to a further embodiment of the invention, on one or both surfaces of the bipolar plate, the protrusions form a plurality of parallel rows of raised truncated pyramids and the dimples form a plurality of rows of complementary indentations or recesses. A truncated pyramid may also be referred to as frustum of a pyramid. In each row of protrusions, multiple of the truncated pyramids are arranged in a row, and between adjacent rows of protrusions, a row of inverted truncated pyramids is formed. In a direction perpendicular to the rows of protrusions, (raised) truncated pyramids and (recessed) inverted truncated pyramids may be arranged in a row in an alternating manner. In the rows, the negative of an inverted truncated pyramid is formed into the surface of the bipolar plate next to a raised truncated pyramid. The structure of the bipolar plate with positive formed and negative formed truncated pyramids on each side may at the same time form ridges and depressions providing flow paths. It may also provide the trapezoidal shape of the protrusions.

In a further aspect of the invention, an electrolysis stack is presented. The electrolysis stack comprises a plurality of electrode cells, wherein the electrode cells each comprise two electrodes in the form of an anode and a cathode, and a membrane separating the anode and cathode, wherein neighboring electrode cells are separated by a bipolar plate as described herein, wherein the bipolar plate is in electrically conductive contact with the anode and cathode of the neighboring electrode cells.

In an electrolysis stack, the plurality of electrode cells are arranged in series, with each cell comprising an anode, cathode, and a membrane. Respectively one of the bipolar plates is placed between adjacent cells so that one side of the bipolar plate connects to the cathode of one cell and the other side connects to the anode of the next cell, creating an alternating electrical polarity across the stack. The stacked arrangement allows the electrolysis system to be scaled up, improving the overall efficiency and capacity for hydrogen and oxygen production.

Preferably, the membrane and/or the anode and/or the cathode are designed in such a way that they can be bent into a wave form (elastic or plastic deformation). They may be compressible, but this is not required.

The membrane is preferably configured as a diaphragm and is used in alkaline electrolysis (AEL) with an alkaline electrolyser. The membrane may also be configured as an anion exchange membrane in anion exchange membrane electrolysis. Although in both AEL and AEM the ion transport through the membrane is based on transport of Hydroxide ions, AEL and AEM differ significantly in their operating principles and components, as is known to a skilled person.

An anion exchange membrane (AEM) is a semipermeable membrane generally made from ionomers and designed to conduct anions while being impermeable to gases such as oxygen or hydrogen. Anion exchange membranes are used in electrolytic cells and fuel cells to separate reactants present around the two electrodes while transporting the anions essential for the cell operation. Moreover, the membrane may be configured for PEM (polymer electrolyte membrane) electrolysis.

The anode and/or the cathode may be a mesh plate or a grid plate. Preferably, the anode has a higher stiffness against being formed into wave shape than the cathode.

For the electrodes, several materials may be used. Preferred are nickel-based options, including, nickel electrodes, electrodes made from nickel alloys, and nickel-coated electrodes.

According to a further embodiment of the invention, adjacent bipolar plates accommodate an electrode cell between them in such a way protrusions of the one bipolar plate are at least partly received within the backside of protrusions of the other bipolar plate. In other words, adjacent bipolar plates accommodate an electrode cell between them in such a way that the electrode cell components (anode, cathode and membrane) are bent. The back side of a protrusion of the other bipolar plate forms a dimple facing the one bipolar plate. The wave shape of the bipolar plates ensures that the anode, cathode and membrane are properly drawn over each other via a protrusion, ensuring close contact of the electrode cell components.

Adjacent bipolar plates may be mounted in a manner such that the adjacent bipolar plates are pressed towards each other and the electrode cell arranged between the adjacent bipolar plates adapts a wavy shape cross-section, which is defined by arrangements of the dimples and protrusions on the sides of the adjacent plates facing each other.

According to a further embodiment of the invention, adjacent bipolar plates are mounted in such a manner that the electrode cell therebetween, at least the electrodes thereof, is primarily subjected to tensile stress. The tensile forces acting in the components of the electrolytic cell ensure a large contact area with close contact, which is beneficial for zero gap configuration. The wave shape of the bipolar plates ensures that the anode, cathode and membrane are properly drawn over each other via a protrusion.

According to a further embodiment of the invention, the anode and/or the cathode are welded to the bipolar plate. Oxidation at the anode in electrolysis is a common effect, because electrons are removed from the reactants at the anode, driving oxidation reactions. This may impair the electrical connection between the bipolar plate and the anode. Thus, it is suggested that the anode be welded to the bipolar plate at least at one spot. At the cathode, reduction can have effects that may impair the electrical connection, too. Therefore, an electrical connection to the bipolar plate via at least one weld spot is advantageous.

The bipolar plate and the electrolysis stack described herein are particularly suitable for alkaline electrolysis. However, other types of electrolysis are also possible, such Proton Exchange Membrane (PEM) electrolysis, Solid Oxide Electrolysis (SOE) and Anion Exchange Membrane (AEM) electrolysis. Preferably, the electrolysis stack is configured for performing electrolysis on an industrial scale.

### BRIEF DESCRIPTION OF THE FIGURES

In the following, the invention will be described with respect to the figures. The figures show preferred embodiments, to which the invention is not limited. The figures and the dimensions shown therein are only schematic. It shows:
- FIG. 1: a bipolar plate according to a first embodiment of the invention in a cross-sectional view;
- FIG. 2: the bipolar plate of FIG. 1 in a top view; and
- FIG. 3: in a cross-sectional view schematically part of an electrolysis stack according to a further embodiment; and

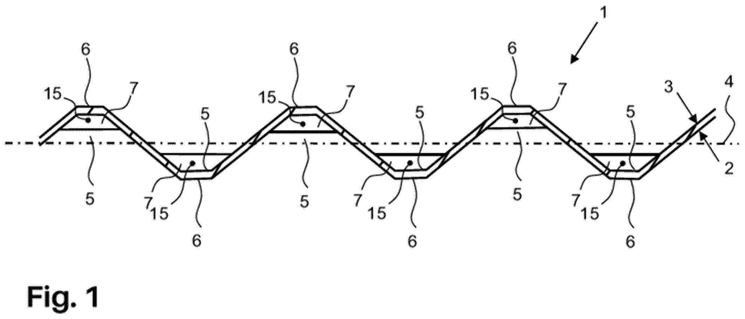

**FIG. 1** shows a section of bipolar plate 1 in its plate cross-section. The bipolar plate comprises two plate sides, a first plate side 2 with a first surface (upper surface in FIG.1) and a second plate side 3 facing away from the first plate side 2 and with a second surface (lower surface in FIG. 1).

A center line 4 runs equidistant between the upper and lower boundaries of the bipolar plate's cross-sectional profile, i.e., of the first side 2 and the second side 3. The center line 4 also represent the midplane of the bipolar plate 1.

The plate cross-section shows a wavy shape or wavy profile with a plurality of dimples 5 and protrusions 6 in an alternating manner along the center line 4 on the first side 2 and a plurality of dimples 5 and protrusions 6 in an alternating manner along the center line 4 on the second side 3.

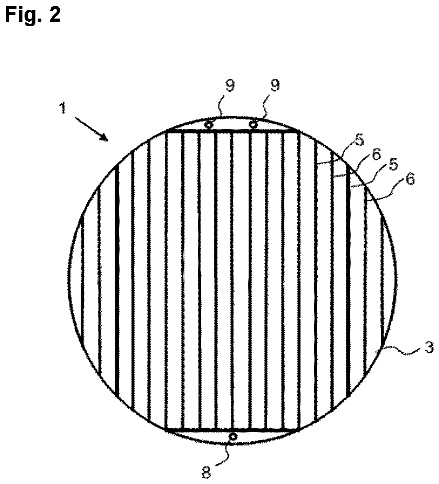

The first side 2 of the bipolar plate 1 is formed like the second plate side 3 of the bipolar plate 1 but forms its negative counterpart. In other words, the protrusions 6 on the first side 2 of the bipolar plate 1 form the dimples 5 on the second side 3 of the bipolar plate 1, and vice versa. The tips or distal ends of the protrusions 6 and the bottom of the dimples 5 are flattened. Thereby, starting from the center line 4, the protrusions 6 and the dimples 5 have a trapezoidal shape in cross-section. The protrusions 6 and the dimples 5 each extend along a respective central axis 15 in the viewing direction and thereby form parallel rows (also shown in FIG. 2).

Between adjacent protrusions 6, ridges 7 project from the bottom of the dimples 5 and extend between the adjacent rows of protrusions. The ridges 7 are provided by corresponding depressions in the projections 6 on the opposite side of the bipolar plate 1. The ridges extend perpendicularly to the longitudinally extending protrusions 6 and dimples 5.

**FIG. 2** shows schematically the circular bipolar plate 1 in a top view onto the second side 3. Lines indicate the protrusions 6 and dimples 5, which are arranged alternately and run parallel along the bipolar plate 1. The ridges 7 of FIG. 1 are not shown, but they are provided along the length of the protrusions 6 at regular intervals to each other. On opposite ends of the bipolar plate 1, in the extension direction of the protrusions 6 and the dimples 5, an inlet 8, e.g., for electrolyte fluid, and outlets 9, e.g., for produced gas are formed in the bipolar plate 1.

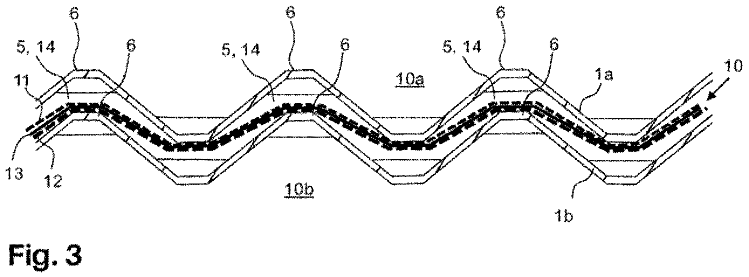

**FIG. 3** demonstrates schematically the sandwich arrangement of an electrolyte cell 10 between two adjacent bipolar plates 1a, 1ab in an electrolysis stack 16 in cross-sectional view. The bipolar plates 1a and 1a each correspond to the bipolar plate 1 in FIG. 1.

The electrolysis cell 10 comprises electrodes in the form of an anode 11 and a cathode 12. The anode 11 in electrically conductive contact with the bipolar plate 1a, the cathode is in electrically conductive contact with the cathode 1. An electrolyte membrane 13 is arranged between the anode 11 and cathode 12. Anode 11, cathode 12 and membrane 13 are of circular shape in correspondence to the circular shape of the bipolar plates 1a, 1b.

The adjacent bipolar plates 1a, 1b accommodate the electrode cell 10 between them in such a way that the protrusions 6 of the one bipolar plate 1b facing the electrolysis cell 10 are partly received within the backside 14 of the protrusions 6 of the other bipolar plate 1a facing away from the electrolyte cell 10 sandwiched between the bipolar plates 1a, 1b. The backside 14 of the protrusion 6 of one side of the bipolar plate 1a forms the dimple 5 on the other side of the bipolar plate 1a.

Thereby, when the electrolyte cell 10 is mounted between the adjacent bipolar plates 1a, 1b and the adjacent bipolar plates 1a, 1b are pressed towards each other, the electrode cell 10 arranged between the adjacent bipolar plates 1a, 1b is bent such as to adapt a wavy shape in cross-section as shown. The bending of the components of the electrolytic cell ensures that they remain in a state in which they are primarily subject to tensile stresses and that the components of the electrolyte cell are forced into very close contact to each other as required in zero gap configuration.

In the stack arrangement, electrolyte cells and bipolar plates alternate. It is indicated schematically that on the side of the bipolar plate 1a facing away from the electrolyte cell 10, a further electrolytic cell 10a is arranged, with the cathode of this electrolytic cell being in contact with the bipolar plate 1a. This electrolytic cell 10 would then be followed by another bipolar plate, which in turn is in contact with the anode of the following electrolytic cell.

On the side of the bipolar plate 1b facing away from the electrolytic cell 10, further arrangement of bipolar plates and electrolyte cells would also be added. It is indicated schematically that a further electrolytic cell 10b is arranged on the side of the bipolar plate 1b facing away from the electrolytic cell 10, with the anode of this electrolytic cell 10b being in contact with the bipolar plate 1b. This electrolytic cell 10 would then be followed by another bipolar plate, which in turn is in contact with the cathode of the subsequent electrolytic cell.

### Reference numerals

- 1: Bipolar plate
- 1a: Bipolar plate
- 1b: Bipolar plate
- 2: First plate side
- 3: Second plate side
- 4: Center line
- 5: Dimple
- 6: Protrusion
- 7: Ridge
- 8: Inlet
- 9: Outlet
- 10: Electrolyte cell
- 10a: Electrolyte cell
- 10a: Electrolyte cell
- 11: Anode
- 12: Cathode
- 13: Membrane
- 14: Backside
- 15: Central protrusion axis

## Claims

1. Bipolar plate (1, 1a, 1b) for forming an electrolysis stack in which a plurality of electrode cells (10, 10a, 10b) are stacked, and the electrode cells (10, 10a, 10b) each comprise two electrodes in the form of an anode (11) and a cathode (12), and a membrane (13) separating the anode (11) and the cathode (12), wherein neighboring electrode cells (10, 10a, 10b) are separated by bipolar plates (1, 1a, 1b) that are in electrically conductive contact with the anode (11) and cathode (12) of the neighboring electrode cells (10, 10a, 10b);
wherein the bipolar plate (1, 1a, 1b) comprises a plate cross-section having a wavy shape providing a plurality of dimples (5) and protrusions (6) in an alternating manner along a center line (4) of the plate cross-section, wherein the protrusions (6) and the dimples (5) extend longitudinally across the bipolar plate (1, 1a, 1b), forming parallel rows.

2. Bipolar plate (1, 1a, 1b) according to any the preceding claims, wherein one plate side (2, 3) of the bipolar plate (1, 1a, 1b) is at least partly formed like the other plate side (2, 3) of the bipolar plate (1, 1a, 1b); preferably, one plate side (2, 3) of the bipolar plate (1, 1a, 1b) is at least partly formed like the other plate side (2, 3) of the bipolar plate (1, 1a, 1b), but forms its negative counterpart.

3. Bipolar plate (1, 1a, 1b) according to any the preceding claims, wherein the protrusions (6) each extend along a protrusion central axis (15), wherein the distance between adjacent protrusion central axes (15) is in a range from 30 mm to 100 mm.

4. Bipolar plate (1, 1a, 1b) according to any the preceding claims, wherein ridges (7) project from the bottom of the dimples (5) and extend between adjacent rows of protrusions (6), the ridges (7) being provided by corresponding depressions in the projections (6) on the opposite side (2, 3) of the bipolar plate (1, 1a, 1b).

5. Bipolar plate (1, 1a, 1b) according to any the preceding claims, wherein the protrusions (6) in each of a first plate cross-sectional view and a second cross-sectional view perpendicular to the first plate cross-sectional view each form one or more trapezoidal shapes.

6. Bipolar plate (1, 1a, 1b) according to any the preceding claims, wherein on one or both surfaces of the bipolar plate (1, 1a, 1b), the protrusions (6) form a row of raised truncated pyramids and the dimples (5) form a row of complementary indentations.

7. Electrolysis stack (16) comprising a plurality of electrode cells (10, 10a, 10b), wherein the electrode cells (10, 10a, 10b) each comprise two electrodes in the form of an anode (11) and a cathode (12), and a membrane (13) separating the anode (11) and cathode (12), wherein neighboring electrode cells (10, 10a, 10b) are separated by a bipolar plate (1, 1a, 1b) according to any of the preceding claims, wherein the bipolar plate (1, 1a, 1b) is in electrically conductive contact with the anode (11) and cathode (12) of the neighboring electrode cells (10, 10a, 10b).

8. Electrolysis stack (16) according to claim 7, wherein adjacent bipolar plates (1, 1a, 1b) accommodate an electrode cell (10, 10a, 10b) between them in such a way that protrusions (6) of the one bipolar plate (1, 1a, 1b) are at least partly received within the backside (14) of protrusions (6) of the other bipolar plate (1, 1a, 1b).

9. Electrolysis stack (16) according to any of the claims 7 and 8, wherein adjacent bipolar plates (10, 10a, 10b) are mounted in such a manner that the electrode cell (1, 1a, 1b) therebetween, at least the electrodes (11, 12), is primarily subjected to tensile stress.

10. Electrolysis stack (16) according to any of the claims 7 to 9, wherein the anode (11) and/or the cathode (12) are welded to the bipolar plate.
